# EUROPÄISCHE PATENTSCHRIFT

(11) **EP 2 251 391 B1**
(45) Veröffentlichungstag und Bekanntmachung des Hinweises auf die Patenterteilung: **07.12.2011**
(21) Anmeldenummer: 10162026.8
(22) Anmeldetag: 05.05.2010
(51) Int. Cl.: C09J 7/02, C09J 11/08

(54) **Optisch detektierbares Klebeband mit verminderten Glanzeigenschaften**
Visually detectable adhesive tape with reduced shine characteristics
Bande adhésive détectable optiquement ayant des propriétés de brillance réduites

(30) Priorität: 14.05.2009 DE 102009021381
(43) Veröffentlichungstag der Anmeldung: 17.11.2010
(73) Patentinhaber: tesa SE, 20253 Hamburg (DE)
(72) Erfinder: Nagel, Christoph, 22417, Hamburg (DE); Czerwonatis, Niels Dr., 21075, Hamburg (DE); Götz, Kerstin, 22547, Hamburg (DE); Forsbach, Christian, 27570 Bremerhaven (DE)

(56) Entgegenhaltungen:
- WO-A1-03/018451
- US-A1- 2001 036 529
- DATABASE WPI Week 199604 Thomson Scientific, London, GB; AN 1996-036064 XP002602629 & JP 7 305038 A (HITACHI KASEI POLYMER KK) 21. November 1995 (1995-11-21)

## Beschreibung

Die Erfindung betrifft ein optisch detektierbares Klebeband für den fliegenden Rollenwechsel von auf Rollen aufgewickeltem Flachbahnmaterial.

Der fliegende Rollenwechsel insbesondere in der Druckindustrie ist ein gängiges Verfahren, um eine alte, fast abgespulte Rolle eines Flachbahnmaterials, etwa eine Papierrolle, durch eine neue zu ersetzen, ohne die schnell laufenden Maschinen anhalten zu müssen. Das Ende der alten Flachbahn wird dabei mit dem Anfang der neuen Flachbahn verklebt, um einen möglichst kontinuierlichen Betrieb zu gewährleisten. Hierfür werden doppelseitig klebende Selbstklebebänder eingesetzt, die hochklebrig und -tackig sind.

Für die Verklebung beim fliegenden Rollenwechsel sind diverse Produkte erhältlich, insbesondere solche, welche neben einem Papierträger eine wasserlösliche Selbstklebmasse beidseits beschichtet aufweisen.

Geeignete Klebebänder für den fliegenden Rollenwechsel weisen beispielsweise einen Hauptträger auf, der auf der Vorderseite mit einer Selbstklebmasse versehen ist und auf dessen Unterseite ein oder mehrere selbstklebende Systeme vorgesehen sind, die einen Träger aufweisen, welcher flächig spalt- oder trennfähig ist. Solche Klebebänder beschreiben beispielsweise die Schriften DE 196 28 317 A1, DE 198 30 673 A1, DE 198 30 674 A1, DE 199 02 179 A1, EP 0 757 657 B1.

Eine Weiterentwicklung von Klebebändern für den fliegenden Rollenwechsel zeichnet sich dadurch aus, dass detektierbare Mittel in das Klebeband integriert sind, die die mittels des Klebebandes verklebte Stelle durch automatische Vorrichtungen (Scanner, Laser, Detektoren) im laufenden Prozess erkennbar machen. So offenbart die WO 03/18451 A ein Klebeband für den fliegenden Rollenwechsel, welches mit zumindest einer mittels eines Detektors optisch erkennbaren Vorrichtung ausgerüstet ist. Das Klebeband integriert somit eine Signalfunktion für derartige Detektoren in sich, die nach vorherigem Stand der Technik durch nachträglich aufgeklebte zusätzliche Etiketten bewirkt wurde. Insbesondere vorgesehen ist eine Modifizierung des Hauptträgers eines solchen Klebebandes, beispielsweise durch Auftragung einer detektierbaren Schicht auf diesem Träger, die durch eine über dieser Schicht liegenden Klebmassenschicht hindurch detektiert werden kann. Das Klebeband wird im Prozess beispielsweise beim Beschleunigen einer neuen Rolle, auf der es zunächst zur Fixierung der letzten Lage verklebt ist, detektiert. Somit kann der Vorgang des fliegenden Rollenwechsels, insbesondere das Verkleben dieses Klebebandes mit dem Ende einer ablaufenden Rolle, zum richtigen Zeitpunkt automatisiert gesteuert ausgelöst werden.
Auch die DE 100 60 757 offenbart ein Verfahren für den fliegenden Rollenwechsel, bei dem ein Sensor auf der neuen Papierrolle vorgesehene Markierungen detektiert, und der Signale erzeugt, anhand derer die Position des Bahnanfangs der neuen Papierrolle, also die Verklebungsstelle, bestimmt wird. Die Markierungen können auch innerhalb des Klebebandes angeordnet sein. Die Prozesssteuerung kann dann mittels einer zentralen Steuerungs- oder Regelungseinheit erfolgen.

Die dem Stand der Technik entsprechenden optisch detektierbaren Klebebänder für den fliegenden Rollenwechsel insbesondere in der Druck- und Papierindustrie verfügen daher üblicherweise auf der im Prozess zum Detektor zeigenden Seite über optisch detektierbare Mittel, zum Beispiel eine optisch detektierbare Schicht, sowie die zum Ankleben an die neue Bahn benötigte (Selbst-)Klebmasse; üblicherweise in Form einer darüber liegenden Schicht.
An der Klebmassenoberfläche wird auf das Klebeband auftreffendes Licht aus der Umgebung des Rollenwechslers spiegelnd reflektiert. Diese Lichtreflektion führt, zusammen mit gegebenenfalls ebenfalls auftretenden Lichtreflektionen an glänzenden Flachbahnen (in der Druckindustrie insbesondere Bedruckstoffen, wie beispielsweise besonders gestrichenen Papieren), zu dem Problem, dass der Detektor, welcher die Position des Bahnanfangs der Rolle im Prozess detektieren und insbesondere den Rollenwechsel einleiten soll, nicht die erforderlichen und/oder verfälschte Signale erhält und dass es in solch einem Fall zu einem fehlerhaften Prozessablauf kommt, was bis zu einem vollständigen Stillstand des Prozesses führen kann. Durch die Störung bei der Detektion des Klebebandes bzw. der Verklebungsstelle, welche gleichzeitig den Bahnanfang darstellt, kann es in der Folge dazu kommen, dass das fehlende oder fehlerhafte Sensorsignal eine zu frühe oder zu späte Änderung der Geschwindigkeiten der Papierrolle(n) oder eine zu frühe oder zu späte Absenkung der Andruckrolle oder des Abschlagmessers nach sich zieht. Weiterhin können fehlende oder fehlerhafte Signale dazu führen, dass der Detektor gar keine Reaktion zeigt, so dass die ablaufende zu ersetzende Flachbahnrolle (Papierrolle) leer läuft, ohne dass es zu einem Ankleben der neuen Flachbahn (Papierbahn) kommt. Somit wird ein teurer Maschinenstillstand hervorgerufen. Nach einem solchen Stillstand muss die neue Bahn durch die komplette Anlage neu eingezogen werden.

Aufgrund der Tatsache, dass in der Umgebung nahezu jeden Rollenwechslers für das für dessen Betrieb arbeitende Personal Lichtquellen notwendig sind, können diese als eigentliche Verursacher des Problems nicht beseitigt werden (Aspekt der Arbeitssicherheit).

Aufgabe der Erfindung ist es, die Fehleranfälligkeit während des optischen Detektiervorganges zu reduzieren und die Funktionssicherheit zu erhöhen.

Gelöst wird die Aufgabe durch ein Klebeband, wie es im Hauptanspruch beschrieben ist. Die Unteransprüche betreffen vorteilhafte Ausgestaltungen der erfindungsgemäßen Klebebänder. Weitere Ansprüche betreffen vorteilhafte Verfahren zur Herstellung der erfindungsgemäßen Klebebänder.
Die Lehre der Erfindung umfasst ein Klebeband, welches derart angepasst ist, dass es eine störende Reflektion an seiner Oberfläche weitestgehend vermeidet, wobei es selbst bei glänzenden zu verarbeitenden Bedruckstoffen nicht zu einer Störung in der automatisierten Erkennung des Klebebandes und/oder der Verklebungsstelle kommt. Gleichzeitig führt die Modifikation des Klebebandes nicht zu einer signifikanten Beeinflussung der klebtechnischen Eigenschaften des Klebebandes; dieses muss auch bei hohen Geschwindigkeiten im Moment des Rollenwechsels zuverlässig an der ablaufenden, zu ersetzenden Bahn ankleben und die Endverklebung der neuen Rolle öffnen (insbesondere durch Spalten oder Trennen innerhalb eines Spaltsystems), wobei die Stelle der bisherigen Endverklebung der neuen Rolle insbesondere nicht-klebend verbleibt. Der Erfindung liegt somit die Idee zugrunde, die Glanzeffekte auf der Oberfläche eines Klebebandes zu verringern, um hieraus resultierende optische Störeffekte zu minimieren.

Die Lösung der Aufgabe wird bewirkt durch ein Klebeband, insbesondere für den fliegenden Rollenwechsel von auf Rollen aufgewickeltem Flachbahnmaterial, mit zumindest einer außenliegenden, gegebenenfalls aber temporär mit einem Abdeckmaterial versehenen, Klebmassenschicht, wobei das Klebeband zumindest auf der Seite der Klebmassenschicht optisch detektierbar ist, insbesondere indem innerhalb oder unterhalb der Klebmassenschicht optisch detektierbare Mittel vorgesehen sind, und wobei die Klebmassenschicht derart ausgestaltet ist, dass die optische Detektierung durch die Klebmassenschicht (bzw. durch die oberhalb der optischen Mittel innerhalb der Klebmassenschicht liegenden Klebmassenteilschicht) hindurch bewirkt werden kann. Erfindungsgemäß ist das Klebeband derart angepasst, dass sein Glanzwert, also der Quotient aus gerichtetem und diffus reflektiertem Anteil des auf die Oberfläche fallenden Lichtstroms, an der außenliegenden Oberfläche des Klebebandes (also die außenliegende Oberfläche der Klebmassenschicht) um mindestens 20 % verringert ist, bezogen auf ein baugleiches, aber nicht angepasstes Klebeband.
Der Glanzwert bezieht sich im Rahmen dieser Schrift jeweils auf die Bestimmung nach DIN 67530, Messung bei einem Winkel von 20° (arithmetischer Mittelwert aus 5 Einzelmessungen). Die Differenz (Reduktion, Verringerung) der Glanzwerte bezieht sich auf diese Mittelwerte.

Vorteilhaft ist das Klebeband ein solches für den fliegenden Rollenwechsel von auf Rollen aufgewickeltem Flachbahnmaterial, wobei das Klebeband zumindest eine Trägerschicht und eine Klebmassenschicht umfasst,
wobei weiterhin zumindest ein Teil der der Klebmassenschicht zugewandten Oberfläche der Trägerschicht optisch detektierbar ist, oder wobei zwischen der Trägerschicht und der Klebmassenschicht optisch detektierbare Mittel vorgesehen sind,
oder wobei innerhalb der Klebmassenschicht optisch detektierbare Mittel vorgesehen sind,
und wobei die Klebmassenschicht derart ausgestaltet ist, dass die optische Detektierung durch die Klebmassenschicht (bzw. durch die oberhalb der optischen Mittel innerhalb der Klebmassenschicht liegenden Klebmassenteilschicht) hindurch bewirkt werden kann,
wobei das Klebeband derart angepasst, dass sein Glanzwert, also der Quotient aus gerichtetem und diffus reflektiertem Anteil des auf die Oberfläche fallenden Lichtstroms, an der außenliegenden Oberfläche des Klebebandes (also die außenliegende Oberfläche der Klebmassenschicht) um mindestens 20 % verringert ist, bezogen auf ein baugleiches, aber nicht angepasstes Klebeband, indem zumindest die außenliegende Oberfläche der Klebemassenschicht durch Aufrauhung oder durch Einbringung einer Strukturierung mechanisch behandelt wurde und/oder der Klebmasse als Füllstoffe Fasern zugesetzt sind.

Ein baugleiches, nicht angepasstes Klebeband weist somit dieselben Bestandteile und Dimensionen auf wie das erfindungsgemäße Klebeband und ist auf dieselbe Weise hergestellt, wobei das Bezugs-Klebeband aber nicht derart angepasst wurde, das sein Glanzwert verringert wurde.

Vorteilhaft weist die gesamte betrachtete Oberfläche des Klebebandes die geforderten Glanzeigenschaften auf, erfindungsgemäß kann aber auch realisiert sein, dass nur ein Teil der Klebebandoberfläche die geforderten Glanzeigenschaften besitzt. Dies kann zum Beispiel dann sinnvoll sein, wenn die optisch detektierbaren Mittel nur einen Teil der Klebebandfläche einnehmen und die Verringerung der Glanzeigenschaften insbesondere in diesem Teil bewirkt werden soll.

Die Anpassung des Klebebandes auf die geforderten Glanzeigenschaften kann vorteilhaft durch eine Anpassung der Klebmassenschicht bewirkt werden. Für ein vorteilhaftes Klebeband ist insbesondere die Klebmassenschicht derart angepasst, dass ihr Glanzwert, also der Quotient aus gerichtetem und diffus reflektiertem Anteil des auf die Oberfläche fallenden Lichtstroms, um mindestens 20 % verringert ist, bezogen auf die nicht behandelte, ansonsten identische Klebmassenschicht.
Ein nicht behandelte, ansonsten identische Klebmassenschicht ist insbesondere ein solche, die auf der identischen Klebmasse beruht und dieselben Dimensionen aufweist.

Insbesondere vorteilhaft ist der Glanzwert des erfindungsgemäßen Klebebandes um mindestens 30 %, besser um mindestens 40 %, bevorzugt um mindestens 50 %, sehr bevorzugt um mindestens 75 % reduziert ist. So lassen sich durch strukturierte Liner sogar Glanzreduktionen von mindestens 80 % realisieren.

Sehr bevorzugt weist die (Haft-)Klebmassenschicht Streuzentren auf, die die Verringerung der Glanzeigenschaften der Klebmassenschicht bewirken. Als Streuzentren im Sinne der vorliegenden erfinderischen Lehre werden solche "Störstellen" (Partikeln, Teilchen, Fehlstellen, Hohlräume und dergleichen) in der Klebmasse bezeichnet, an denen das Licht derart gestreut wird, dass es beim Verlassen des Klebebandes nicht als gerichtet reflektiertes Licht detektiert wird.

Die Erfindung betrifft weiterhin ein Klebeband für den fliegenden Rollenwechsel von auf Rollen aufgewickeltem Flachbahnmaterial, wobei das Klebeband zumindest eine Trägerschicht und eine Klebmassenschicht umfasst,
wobei weiterhin zumindest ein Teil der der Klebmassenschicht zugewandten Oberfläche der Trägerschicht optisch detektierbar ist, oder wobei zwischen der Trägerschicht und der Klebmassenschicht optisch detektierbare Mittel vorgesehen sind,
und wobei die Klebmassenschicht derart ausgestaltet ist, dass die optische Detektierung durch die Klebmassenschicht hindurch bewirkt werden kann, bei der der Klebmassenschicht Füllstoffe zugesetzt sind, die geeignet sind, den Oberflächenglanz der Klebmassenschicht zu verringern. Diese Zusatzstoffe werden bevorzugt derart gewählt, dass sie die weiteren Eigenschaften der Klebmasse, insbesondere deren Klebeeigenschaften, so wenig wie möglich, insbesondere gar nicht, verschlechtern.
Als Füllstoffe, die geeignet sind, den Oberflächenglanz der Klebmassenschicht zu verringern, haben sich insbesondere faserförmige Zusatzstoffe als vorteilhaft herausgestellt.
Besonders bevorzugt werden der Klebmasse Polyethylenterephthalat-Fasern (PET-Fasern) zugesetzt. Als besonders geeignet haben sich PET-Fasern mit einer mittleren Länge bis zu 1 cm herausgestellt; eine sehr vorteilhaft einsetzbare Faserart sind PET-Fasern mit einer Länge von 5,5 bis 6,5 mm (Profil-Projektor) und einer Dichte von 1,38 g/cm³ bei 20 °C (DIN 51757).

Vorteilhaft werden die Fasern in einem Anteil von mindestens 1 Gew.-Teile Fasern auf 100 Teile (Haft-)Klebmasse, besser mindestens 1,5 Gew.-Teile Fasern auf 100 Teile (Haft-)Klebmasse, noch besser mindestens 2,5 Gew.-Teile Fasern auf 100 Teile (Haft-)Klebmasse eingesetzt. Nach oben hin lassen sich zur Verbesserung der glanzverringernden Eigenschaften noch höhere Faseranteile zusetzen (etwa mindestens 3 Gew.-Teile Fasern auf 100 Teile (Haft-)Klebmasse, besser mindestens 5 Gew.-Teile Fasern auf 100 Teile (Haft-)Klebmasse, noch besser mindestens 10 Gew.-Teile Fasern auf 100 Teile (Haft-)Klebmasse), mit ansteigendem Faseranteil ist, geht dann aber ein zunehmender Einfluss auf die klebtechnischen Eigenschaften der (Haft-)Klebmasse einher; zudem lassen sich mit einem hohen Füllstoffanteil vermischte Klebmassen in der Regel schlechter verarbeiten. So kann es zum Beispiel schwierig werden, ein gleichmäßiges, homogenes Beschichtungsbild zu erzeugen. Daher kann es sinnvoll sein, die Klebmasse bei einem erhöhten Faseranteil zu Verdünnen (Zusatz von Lösungsmittel und/oder Weichmachern und/oder dergleichen).

Insbesondere vorteilhaft ist das Klebeband, bei dem die Klebmassenschicht mit Füllstoffen versehen ist, ein solches, bei dem Glanzwert, also der Quotient aus gerichtetem und diffus reflektiertem Anteil des auf die Oberfläche fallenden Lichtstroms, um mindestens 20 % verringert ist, bezogen auf ein baugleiches, aber nicht angepasstes Klebeband, also ein Klebeband nach dem Hauptanspruch.

Ein weiterer von der Erfindung umfasster Gegenstand ist ein Klebeband für den fliegenden Rollenwechsel von auf Rollen aufgewickeltem Flachbahnmaterial, wobei das Klebeband zumindest eine Trägerschicht und eine Klebmassenschicht umfasst,
wobei weiterhin zumindest ein Teil der der Klebmassenschicht zugewandten Oberfläche der Trägerschicht optisch detektierbar ist, oder wobei zwischen der Trägerschicht und der Klebmassenschicht eine optisch detektierbare Schicht vorgesehen ist,
und wobei die Klebmassenschicht derart ausgestaltet ist, dass die optische Detektierung durch die Klebmassenschicht hindurch bewirkt werden kann, bei dem zumindest eine der Oberflächen der Klebmassenschicht, insbesondere die bei der Anwendung des Klebebandes außenliegende Oberfläche der Klebmasse, zur Verringerung des Glanzwertes der Oberfläche mechanisch behandelt wurde.

Insbesondere vorteilhaft kann die Oberfläche aufgerauht sein. Weiterhin kann eine Strukturierung, insbesondere eine Mikrostrukturierung, zumindest einer der Oberflächen der Klebmassenschicht vorgesehen sein. In besonders vorteilhafter Weise wird zumindest die im Anwendungsfall außen liegende Oberfläche der Klebmassenschicht mit einer Strukturierung, insbesondere einer Mikrostrukturierung, versehen.

Die zumindest eine der Oberflächen der Klebmassenschicht kann dabei vorteilhaft mit einem Profil innerhalb der Klebmassenoberfläche versehen sein, insbesondere durch Einbringung der komplementären Prägestruktur einer strukturierten Oberfläche.

Die Oberflächenstruktur in der Klebmassenschicht kann insbesondere durch ein Verfahren hergestellt werden, wie dies in der WO 2007/079913 beschrieben ist. Demnach werden Klebeschichten mit Abdeckungen (Release Linern) mit dreidimensional erhaben strukturierten Oberflächen versehen, wobei die Abdeckungen mit der Klebschicht verbindbar und von dieser wieder ablösbar sind, wobei sich weiterhin die Strukturen in der Oberfläche der Abdeckungen als komplementäre Prägestruktur in die Klebeschicht einprägen.
Eine nicht behandelte, ansonsten identische Klebmassenschicht im Sinne der bisherigen Verwendung dieses Ausdrucks ist insbesondere eine solche, die - neben ansonsten identischen Merkmalen - auf ein glattes Abdeckmaterial (Oberflächenrauhigkeit kleiner 1 µm) aufgelegt und von diesem umkaschiert wurde.
Es ist vorteilhaft, eine Struktur in den Abdeckungen vorzusehen, die auf der Klebmassenschicht ein Muster erzeugt, das für einen hohen Grad an diffuser Reflektion sorgt, wenn die Klebmassenoberfläche mit Licht bestrahlt wird. Hier ist es vorteilhaft, wenn auf der Klebmassenoberfläche durch die Strukturierung eine Vielzahl an Streuzentren erzeugt wird.

Als insbesondere vorteilhaft haben sich zur Verringerung des Glanzes Strukturen der Klebmassenoberfläche des erfindungsgemäßen Klebebandes herausgestellt, die eine Strukturtiefe von mindestens 10 µm oder mehr, besser von 15 µm oder mehr, bevorzugt von 20 µm oder mehr aufweisen.

Als besonders vorteilhaft haben sich mikrostrukturierte Oberflächenstrukturen herausgestellt, die eine Anzahl von Ausgestaltungen (Erhebungen und/oder Aussparungen, zum Beispiel Hemisphären, Prismen, Pyramiden, Ellipsen, Nuten) aufweisen, die jeweils eine Höhe bzw. Tiefe von mindestens 10 µm oder mehr, besser von 15 µm oder mehr, noch besser von 25 bis 250 µm haben.

Die O b e rflächenstrukturen können insbesondere derart sein, wie sie für Klebmassenoberflächen, insbesondere Haftklebemassenoberflächen, in den Schriften WO 95/11945 A (→ EP 725 809 B1) und WO 98/29516 A (→ EP 951 518 B1) dargestellt sind oder wie sie in den genannten Schriften als erhältlich dargestellt sind. Auf den Offenbarungsgehalt der genannten Schriften, insbesondere der Ansprüche 1 bis 10 der WO 95/11945 A, der Ansprüche 1 bis 10 der EP 725 809 B1, der Ansprüche 1 bis 15 der WO 98/29516 A und der Ansprüche 1 bis 17 der EP 951 518 B1 und ganz besonders auf die dort genannten Oberflächentopographien sei daher diesbezüglich explizit Bezug genommen.

Auch das erfindungsgemäße Klebeband, bei dem zumindest eine der Oberflächen des Klebebandes zur Verringerung des Glanzwertes der Oberfläche mechanisch behandelt wurde, ist insbesondere vorteilhaft ein solches, bei dem Glanzwert, also der Quotient aus gerichtetem und diffus reflektiertem Anteil des auf die Oberfläche fallenden Lichtstroms, um mindestens 20 % verringert ist, bezogen auf ein baugleiches, aber nicht angepasstes Klebeband, also ein Klebeband nach dem Hauptanspruch.

Die Oberflächenbehandlung zur Verringerung des Glanzverhaltens kann entweder zusätzlich zu der Ausführungsvariante, bei der ein Füllstoffzusatz in der Klebmassenschicht vorgesehen ist, oder auch alternativ hierzu verwirklicht werden Letztgenannte Ausführung der Erfindung kann insbesondere auch in den Fällen zur Umsetzung kommen, wenn sich Füllstoffe nicht oder nicht in gewünschter Menge einsetzen lassen.

Die nachfolgenden Beschreibungen stellen Weiterentwicklungen für jeden der Erfindungsgegenstände dar und sind nicht auf bestimmte Ausführungsformen beschränkt.

Das erfindungsgemäße Klebeband ist vorteilhaft derart ausgestaltet, dass es eine - im Anwendungsfall - außenliegende Klebmassenschicht aufweist, wobei unter dieser außenliegenden Klebmassenschicht oder innerhalb dieser außenliegenden Klebmassenschicht Mittel vorgesehen sind, die eine optische Detektierung insbesondere mittels geeigneter Sensoren oder Detektoren erlauben (im Folgenden sollen vom Begriff "Detektor" alle Vorrichtungen umfasst sein, die eine - insbesondere automatisierte - optische Detektierung der detektierbaren Mittel erlauben). Als Detektoren lassen sich optische Lesegeräte, beispielsweise Scanner und/oder Laser, einsetzen. Die Erkennung erfolgt dabei insbesondere berührungslos.
Für den Detektiervorgang ist es von Vorteil, die außenliegende Klebmassenschicht - zumindest im Bereich der darunter oder darin liegenden optisch detektierbaren Mittel - lichtdurchlässig zu gestalten, um eine Erkennung durch die Klebmassenschicht hindurch zu ermöglichen. Besonders bevorzugt ist die außenliegende Klebmassenschicht daher transparent, teiltransparent oder transluzent ausgestaltet.

Als optisch detektierbare Mittel ist vorteilhaft eine Farbschicht und/oder eine - insbesondere metallisch - reflektierende Schicht unterhalb der außenliegenden Klebmassenschicht geeignet, in vorteilhafter Weise kann eine dort vorgesehene Trägerschicht des Klebebandes eingefärbt sein. Die Farbschicht oder die Einfärbung einer Trägerschicht ist vorteilhaft weiß, schwarz oder silberfarben; als metallisch reflektierende Schicht kann eine Metallisierung einer Materialschicht - etwa einer Trägerschicht des Klebebandes - oder auch eine Metallschicht vorgesehen sein.
Als optisch detektierbare Mittel können unterhalb der außenliegenden Klebmassenschicht, insbesondere aufgebracht auf einer dort vorgesehenen Trägerschicht des Klebebandes, statt der vorstehend beschriebenen Farbschichten oder metallisch reflektierenden Schichten oder zusätzlich zu diesen Markierungen vorgesehen sein, die von den Detektoren detektiert werden können. Die Markierungen können weiterhin beispielsweise Farbstreifen und/oder Farbelemente (insbesondere weiß, schwarz oder silberfarben), Metallstreifen und/oder Metallelemente, Strich- Bzw. Barcodes, Reflektoren, Beugungsgitter, Hologramme sein, um nur einige zu nennen und ohne sich hierdurch unnötig beschränken zu wollen.
Einsetzbar sind beispielsweise auch Systeme entsprechend der DE 199 35 775 A1 mit einem Polymerträger, in welchen an einzelnen Informationseinheiten zugeordneten Stellen in Abhängigkeit von der einzugebenden Information brechzahländernde Atome und/oder Moleküle eingebracht werden. Einsetzbar sind auch Informationsträger, welche mehrere Lagen eines Polymerträgers aufweisen, durch die hindurch aus einer vorgewählten Polymerträgerlage auslesbar und gegebenenfalls schreibbar sind, vergleiche hierzu beispielsweise die DE 199 47 782 A1.
Ein weiteres Beispiel für optisch detektierbare Vorrichtungen sind bestimmte Farbgebungen des Hauptträgers, welche durch geeignete Detektiersysteme ebenfalls detektiert werden können. Hier sei beispielhaft verwiesen auf Systeme entsprechend der DE 199 32 902, wobei ein Polymerträger und eine zusätzliche Schicht vorgesehen sind, und die zusätzliche Schicht einen Farbstoff enthält und zum Speichern von Informationen lokal optisch veränderbar ist.

Die optische Detektierung kann auch dadurch bewirkt werden, dass die außenliegende Klebmassenschicht selbst eingefärbt ist, vorteilhaft in schwarz oder silberfarben. Gleichzeitig kann durch geeignete Maßnahmen erfindungsgemäß der Oberflächenglanz der Klebmassenschicht reduziert sein, was in besonders bevorzugter Vorgehensweise durch die Farbpigmente zum Einfärben der Klebmassenschicht selbst bewirkt werden kann.

Weiter vorteilhaft kann ein Verbund aus zumindest einer (insbesondere schwarz) eingefärbten Klebmassenschicht und einer außenliegenden lichtdurchlässigen Klebmassenschicht (letztere entweder glanzreduzierend angepasst oder nicht; insbesondere eine lichtdurchlässige Klebmassenschicht wie bereits vorstehend beschrieben) vorgesehen sein; so können die Vorteile einer gefärbten Klebmassenschicht realisiert werden, ohne dass die Farbpartikeln die zu verklebenden Untergründe (Flachbahnen) verschmutzen.
Die Detektierung der optisch detektierbaren Mittel und die Durchführung des Rollenwechsel-Prozesses kann prinzipiell in derselben Weise stattfinden, wie dies in der WO 03/18451 offenbart ist. Vorteil bei Einsatz des erfindungsgemäßen Klebebandes und/oder bei Durchführung des nachstehend beschriebenen erfindungsgemäßen Verfahrens ist es allerdings, die Prozessstörungen durch fehlerhafte und/oder fehlende Signale zu vermeiden, indem die Glanzeigenschaften des Klebebandes (bzw. der Klebmassenschicht) minimiert werden.

Die außenliegende Klebmassenschicht ist in einer besonders bevorzugten Weise eine Haft- oder Selbstklebmasse.
Haftklebmassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Klebmasse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebmassen gehen unter anderem insbesondere auf deren viskoelastische Eigenschaften zurück.

Die für die erfindungsgemäßen Klebebänder eingesetzten Klebmassen weisen in vorteilhafter Weise einen hohen Tack auf. Unter dem Begriff "Tack" ("Klebrigkeit") versteht man die Eigenschaft von Haftklebmassen, eine sofortige Haftung an vielen Werkstoffen zu bewirken. Diese Eigenschaft ist für die einzelnen Werkstoffe, auf denen der Tack einer bestimmten Haftklebmasse angegeben werden soll, beispielsweise quantifizierbar gemäß AFERA 4015 (Quick Stick) oder PSTC-6 (Rolling Ball Tack).
Der Tack der erfindungsgemäß eingesetzten Klebmassen sollte insbesondere so hoch sein, dass ein sicheres (Sofort-)Verkleben auch bei Geschwindigkeiten von 700 m/min und mehr erfolgen kann.
Für die außenliegende Klebmassenschicht bzw. Haftklebmassenschicht werden vorteilhaft Klebmassenaufträge von 30 bis 100 g/m² realisiert, für die konkreten Einsatzgebiete kann es aber durchaus vorteilhaft sein, von diesem Klebmassenauftrag nach oben oder nach unten von diesem Bereich abzuweichen.

Als besonders vorteilhaft einzusetzende Haftklebmassen haben sich Acrylathaftklebmassen herausgestellt. Bevorzugt wird eine solche Haftklebmasse eingesetzt, die auf einem Polymer aus den folgenden Verbindungen basiert:
30 bis 60 Gew.-% Butylacrylat, 30 bis 60 Gew.-% Acrylsäure, 1 bis 10 Gew.-% Vinylcaprolactam, wobei diese Komponenten sich zu 100 % addieren können oder wobei die Haftklebmasse weitere Comonomere aufweisen kann, so dass sich die Gewichtsanteile aller Komponenten zu 100 Gew.-% addieren.
Sehr vorteilhaft wird das Polymer zur Herstellung der Haftklebemasse mit einem Weichmacher abgemischt, wobei es vorteilhaft ist, wenn auf 20 bis 40 Gew.-% des Polymers 60 bis 80 Gew.-% des Weichmachers kommen, wobei insbesondere vorteilhaft auf 100 Teile dieser Haftklebmasse noch bis zu 1,5 Gew.-Teile eines Vernetzers zugesetzt werden. Die Haftklebmasse kann aber auch derart abgemischt sein, dass weitere Polymere, Harze oder Additive zugemischt werden.
Weitere vorteilhaft für das erfindungsgemäße Klebeband einsetzbare Haftklebmassen offenbaren beispielsweise die Schriften DE 102 21 278 A, DE 103 13 652 A, DE 10 2007 037 122 A, DE 10 2007 041 734 A, auf deren Offenbarung hiermit ausdrücklich Bezug genommen wird.

Die in den vorgenannten Schriften genannten Weichmacher, Vernetzer und sonstigen Additive seien explizit auch für die Klebmassen der vorliegenden Anmeldung bezeichnet, auch wenn die Klebmasse ansonsten von denen in diesen Schriften genannten abweicht.

Weiterhin kann die erfindungsgemäß eingesetzte Haftklebmasse Orthophosphorsäure enthalten, insbesondere in einem Anteil bis zu 10 Gew.-%, besonders bevorzugt zu einem Anteil von 2 bis 5 Gew.-%, bezogen auf den reinen Phosphorsäuregehalt in der Haftklebmasse.

Das erfindungsgemäß ausgestaltete Klebeband kann von seinem Aufbau her prinzipiell jedes für den - insbesondere fliegenden - Rollenwechsel geeignete Klebeband sein, welches optisch detektierbar ausgestaltet werden kann. Hier sei beispielsweise verwiesen auf die DE 196 28 317 A1, DE 196 32 689 A1, DE 198 30 673 A1, DE 198 30 674 A1, DE 198 41 609 A1, DE 199 02 179 A1, EP 0 757 657 B1.

Als sehr geeignet hat sich beispielsweise ein Aufbau dargestellt, wie er in der WO 03/018451 A1 beschreiben wird. Ein solcher, im Rahmen der vorliegenden Erfindung ebenfalls vorteilhaft realisierbarer Aufbau zeichnet sich dadurch aus, dass das Klebeband zumindest ein klebendes spaltbares System aufweist und mit zumindest einer mittels eines Detektors optisch erkennbaren Vorrichtung ausgerüstet ist. Vorteilhaft wird ein Klebeband verwendet, welches zumindest einen Hauptträger mit zumindest einer Schicht einer Selbstklebmasse auf der Oberseite aufweist. Auf der Unterseite des Klebebandes befindet sich das spaltbare System, bevorzugt in Form eines Streifens eines spaltbaren Systems, das auf der offenliegenden Seite ebenfalls selbstklebend ausgerüstet ist. Dieses spaltbare System spaltet beim Einsatz im Rollenwechsel-Prozess in der Art, dass keine klebrigen Rückstände verbleiben und den Maschinendurchgang behindern.
Sehr vorteilhaft weist das Klebeband einen Hauptträger auf, wobei auf dem Hauptträger eine optisch detektierbare Schicht vorgesehen ist und/oder im Hauptträger optisch detektierbare Mittel integriert sind, die auf der Seite des Hauptträgers angeordnet ist, der im Prozess des fliegenden Rollenwechsels dem Detektor zugewandt ist. Auf der optisch detektierbaren Schicht oder auf dem Hauptträger mit den integrierten optisch detektierbaren Mitteln ist die außenliegende, insbesondere lichtdurchlässige Klebmassenschicht vorgesehen.
Auf die in der WO 03/018451 A1 beschriebenen Ausführungsformen wird ausdrücklich Bezug genommen.

Das erfindungsgemäße Klebeband kann insbesondere für den fliegenden Rollenwechsel eingesetzt werden. Der Prozess kann prinzipiell in jeder Verfahrensweise betrieben werden, in der eine optische Detektierung des Klebebandes oder der mittels des Klebebandes bewirkten Verklebungsstelle stattfindet. Der Prozess wird dabei insbesondere derart durchgeführt, wie er in der WO 03/18451 A beschreiben wird, oder derart, wie er in der DE 100 60 757 A dargestellt ist. Jede der in einer dieser Schriften beschriebenen Verfahrensvarianten kann dabei durchgeführt werden.

Gegenstand der Erfindung ist demgemäß auch ein Verfahren für den fliegenden Rollenwechsel von auf Rollen aufgewickeltem Flachbahnmaterial, bei welchem die oberste Flachbahn (11) einer neuen Rolle mit einem Klebeband (1), welches mit zumindest einem Hauptträger (2), zumindest einer Schicht einer Selbstklebmasse (3) auf der Oberseite und zumindest einem zur Erzeugung einer lösbaren Verbindung befähigten System (6) auf der Unterseite ausgerüstet ist, an der darunterliegenden Bahn (12) fixiert wird und wobei ein Teil der Selbstklebmasse (3) auf der Oberseite des Klebebandes offenliegt, woraufhin die so ausgerüstete neue Rolle neben eine fast gänzlich abgespulte zu ersetzende alte Rolle platziert wird und auf die im wesentlichen gleiche Drehgeschwindigkeit wie diese beschleunigt wird, dann gegen die alte Bahn (13) gedrückt wird, wobei die offenliegende Selbstklebmasse (3) des Klebebandes (1) mit der alten Bahn (13) bei im wesentlichen gleichen Geschwindigkeiten der Bahnen verklebt, während zugleich das System (6) die Verklebung der obersten Flachbahn (11) der neuen Rolle auf der darunterliegenden Bahn (12) derart öffnet, dass nach der Öffnung keine klebenden Bereiche offenliegen, und wobei der Zeitpunkt des Verklebungsvorganges der alten Bahn (13) mit der obersten Bahn (11) der neuen Rolle durch einen Detektor bestimmt wird, indem das Klebeband (1) oder zumindest ein Teil hiervon durch den Detektor optisch erkannt wird, wobei die Selbstklebmassenschicht (3) auf der Oberseite des Klebebandes (1) derart angepasst ist, dass der Glanzwert an ihrer außenliegenden Oberfläche mindestens 20 % geringer ist als derjenige einer nicht behandelten, ansonsten identischen Klebmassenschich, gemäß Anspruch 9.

Besonders bevorzugt wird hierfür ein erfindungsgemäßes Klebeband eingesetzt.

Der Einsatz des erfindungsgemäßen Klebebandes und/oder die Durchführung des erfindungsgemäßen Verfahrens führt zu einer Verringerung der Fehlerhäufigkeit, da die Sicherheit des optischen Detektionsvorganges erhöht wird. Durch die erfindungsgemäße Anpassung der Klebmasse bzw. der Klebmassenoberfläche kommt es nicht oder nur in wesentlich vermindertem Maße zu einer Störung der Detektoren. Insbesondere wird ein Großteil des auf die Klebmassenschicht auftreffenden Lichts aus Lichtquellen in der Umgebung der Rollenwechsler durch die erfindungsgemäße Anpassung der Klebmasse bzw. deren Oberfläche diffus und nicht gerichtet reflektiert. Gleichzeitig werden die klebtechnischen Eigenschaften der Klebmasse, insbesondere deren hoher Tack, nur unwesentlich beeinflusst.

### Experimente

Zur Verifizierung des Einflusses der erfindungsgemäßen Lehre auf die Glanzeigenschaften von Klebeband-Oberflächen wurden die im Folgenden beschriebenen Versuche durchgeführt.

Dazu wurden Messungen in Entsprechung zur DIN 67530 mittels eines handelsüblichen Glanzmessgerätes [Glanzmesser (Glossmeter) ZGM 1120 der Firma Zehntner GmbH Testing Instruments, CH-Sissach] durchgeführt. Die Messungen erfolgten in einem Winkel von 20 ° (20 °-Reflektometerwert nach DIN 67530).
Prüfkörper: Oberflächen wie nachfolgend angegeben.
Alle Messungen erfolgten nach Kalibrierung mittels des zugehörigen Kalibrierungsstandards (Brechungsindex angenähert an 1,567); rückführbar auf BAM (Bundesanstalt für Materialforschung und -Prüfung, DE). Als Vergleichsstandards dienen weiterhin die nicht mit Klebmasse versehenen Schwarzflächen (siehe Referenzbeispiele A, B und C). Für die Beurteilung der erfindungsgemäßen Lehre kommt es auf die relativen Werte (Veränderung mit Klebmasse) und nicht auf die Absolutwerte an.
Die Oberflächen der Klebmassenschichten werden durch die entsprechenden Beschichtungs- bzw. Laminierverfahren bedingt.

### Herstellung der Klebmasse:

Es wurden 642 g einer 30 %igen Lösung eines radikalisch polymerisierten Polymers bestehend aus 47 % Acrylsäure, 50 % Butylacrylat und 3 % Vinylcaprolactam in einem 1:1:1 Gemisch aus Wasser, Isopropanol und Aceton mit 357 g Polyoxyethylen(15)kokosamin (Handelsname Ethomeen C-25, Firma Akzo; CAS-Nr. 61791-14-8) und 0,70 g des Bisglycidylethers von Bisphenol A (Bisphenol-A-Epichlorhydrin Mg < 700; Handelsname Epikote 828 LVEL, Firma Hexion, CAS-Nr. 25068-38-6) abgemischt.
Das Polymer ist durch eine massenmittlere Molmasse Mg von 9•10⁵ g/mol und eine Polydispersität von 8 gekennzeichnet.

Im Falle der Beispiele 2 bis 4 wurden der so hergestellten Haftklebmasse die bei den jeweiligen Beispielen angegebenen Füllstoffe zugesetzt.

### Beschichtung:

Die wie vorstehend beschrieben hergestellte Haftklebmasse wurde als 30 %ige Lösung in einem 1:1:1 Gemisch aus Wasser, Isopropanol und Aceton mittels eines Streichbalkens auf ein Releasematerial beschichtet (Referenzbeispiel A2 und Beispiele 2 bis 5: Releaseliner glatt: siliconisierte Polyethylenterephthalat-Folie - Oberflächenrauhigkeiten kleiner 1 µm; Beispiel 1: Releaseliner rauh; silikonisiertes polyethylenbeschichtetes Papier; Kanalstruktur mit Strukturtiefe 20 µm). Nach 120 minütiger Konditionierung bei Raumtemperatur wurden die Lappenmuster für 20 Minuten bei 100 °C getrocknet. Der Masseauftrag betrug nach der Trocknung 50 g/m².
Zur Herstellung der Prüfmuster wurde die so erhaltene Haftklebmassenschicht auf die schwarze Seite eines Papierträgers umkaschiert (Papierträger: handelsübliches, einseitig gestrichenes flexibles Verpackungspapier, 80 g/m², einseitig vollflächig mit schwarzer Druckerfarbe bedruckt; Klebmassenauftrag nach der Umkaschierung ebenfalls 50 g/m²).

Als Referenz wurde eine Glanzmessung auf der schwarzen Seite eines wie oben beschriebenen Papierträgers ohne Klebmassenschicht durchgeführt (im Folgenden als Referenzpapier bezeichnet; Referenzbeispiel A1). Eine zweite Referenzmessung wurde mit einem zweiten Papierträger vorgenommen, auf dessen schwarze Seite aber zuvor eine Beschichtung der wie vorstehend beschreiben hergestellten Klebmasse (50 g/m²; kein Zusatz von Füllstoffen; keine Oberflächenmodifizierung) wie vorstehend beschrieben aufgebracht (Umkaschierung) und getrocknet wurde (Referenzbeispiel A2; Messung auf der nach außen schwarz erscheinenden Klebmassenoberfläche). Hierdurch konnte eine geringe Verringerung des Glanzwertes bei einem Winkel von 20 ° festgestellt werden. Entsprechende Muster wurden mit modifizierten Klebmassenschichten untersucht (Beispiele 1 bis 5, Klebmassenauftrag jeweils 50 g/m² auf dem vorstehend beschriebenen Referenzpapier). Die Proben wurden wie folgt modifiziert:
Beispiel 1: Die wie vorstehend beschrieben hergestellte Klebmasse wurde mit einem Flächengewicht von 50 g/m² auf einen strukturierten Liner (silikonisiertes polyethylenbeschichtetes Papier; Kanalstruktur mit Strukturtiefe 20 µm) gemäß der vorstehenden allgemeinen Beschichtungsvorschrift aufgebracht und getrocknet. Diese Schicht wurde auf das Träger-Papier (schwarze Seite eines wie vorstehend beschriebenen Referenzpapiers) umkaschiert, so dass in der nun freiliegenden Klebmassenoberfläche die komplementäre Prägestruktur des strukturierten Liners eingeprägt war. Diese Oberfläche wurde bezüglich ihres Glanzverhaltens vermessen.
Beispiel 2: Der wie vorstehend beschrieben hergestellten Klebmasse wurden PET-Fasern beigemischt [Länge 5,5 bis 6,5 mm (Profil-Projektor); Dichte 1,38 g/cm³ (DIN 51757; Zubereitung von 1,0 g Fasern auf 20 g i-Propanol)]. Es wurde durch eine innige Vermischung eine möglichst homogene Faserverteilung bewirkt. Der Feststoffgehalt betrug 3 Gew.-Teile Fasern auf 100 Gew.-Teile Klebmasse (fest auf fest). Die additivierte Klebmasse wurde mit einem Flächengewicht von 50 g/m² auf das Träger-Papier (schwarze Seite eines wie vorstehend beschriebenen Referenzpapiers) gemäß der vorstehenden allgemeinen Beschichtungsvorschrift aufgetragen und getrocknet. Die Klebmassen-Oberfläche wurde bezüglich ihres Glanzverhaltens vermessen.
Beispiel 3: Es wurde analog Beispiel 2 vorgegangen; der Feststoffgehalt an Fasern betrug hier jedoch 1,6 Gew.-Teile Fasern auf 100 Gew.-Teile Klebmasse (fest auf fest).
Beispiel 4: Der wie vorstehend beschrieben hergestellten Klebmasse wurde aufgeschlämmte Kreide beigemischt [3,3 g Kreide aufgeschlämmt in 11,8 g Aceton]. Der Feststoffgehalt betrug 0,7 Gew.-Teile Fasern auf 100 Gew.-Teile Klebmasse (fest auf fest). Die additivierte Klebmasse wurde mit einem Flächengewicht von 50 g/m² auf das Träger-Papier (schwarze Seite eines wie vorstehend beschriebenen Referenzpapiers) gemäß der vorstehenden allgemeinen Beschichtungsvorschrift aufgetragen und getrocknet. Die Klebmassen-Oberfläche wurde bezüglich ihres Glanzverhaltens vermessen.
Beispiel 5: Es wurde analog Beispiel 2 vorgegangen; der Feststoffgehalt an Kreide betrug hier jedoch 3,9 Gew.-Teile Kreide auf 100 Gew.-Teile Klebmasse (fest auf fest).

### Ergebnisse:

| **Beispiel** | **Kurzbeschreibung** | **Glanzeinheit (20** °) **Mittelwert aus 5 Messungen** |
|---|---|---|
| Referenz A1 | handelsübliches, einseitig gestrichenes flexibles Verpackungspapier, 80 g/m², einseitig vollflächig mit schwarzer Druckerfarbe bedruckt (ohne Klebmasse) | **155** |
| Referenz A2 | Unbehandelte Klebmasse | **136** |
| Beispiel 1 (erfindungsgemäß) | Strukturierte Klebmassenoberfläche | **26** |
| Beispiel 2 (erfindungsgemäß) | PET-Fasern, 3 Gew.-Teile Fasern / 100 Gew.Teile Klebmasse | **51** |
| Beispiel 3 (erfindungsgemäß) | PET-Fasern, 1,6 Gew.-Teile Fasern / 100 Gew.Teile Klebmasse | **89** |
| Beispiel 4 (nicht erfindungsgemäß) | Kreide aufgeschlämmt, 0,7 Gew.-Teile Kreide / 100 Gew.Teile Klebmasse | **151** |
| Beispiel 5 (nicht erfindungsgemäß) | Kreide aufgeschlämmt, 3,9 Gew.-Teile Kreide / 100 Gew.Teile Klebmasse | **133** |

Es konnte gezeigt werden (Beispiele 1 bis 3), dass durch geeignete Füllstoffe (PET-Fasern) sowie durch die Oberflächenmodifizierung der Klebmassenschicht der Oberflächenglanz der Klebmassenschicht signifikant reduziert werden konnte. Füllstoffe wie Kreide eignen sich hingegen nicht zur Oberflächenglanzreduzierung nicht (Beispiele 4 und 5).

## Patentansprüche

1. Klebeband für den fliegenden Rollenwechsel von auf Rollen aufgewickeltem Flachbahnmaterial, das Klebeband umfassend zumindest eine Trägerschicht und eine Klebmassenschicht,
wobei zumindest ein Teil der der Klebmassenschicht zugewandten Oberfläche der Trägerschicht optisch detektierbar ausgestaltet ist,
oder wobei zwischen der Trägerschicht und der Klebmassenschicht oder innerhalb der Klebstoffschicht optisch detektierbare Mittel vorgesehen sind,
und wobei die Klebmassenschicht derart ausgestaltet ist, dass die optische Detektierung durch die Klebmassenschicht hindurch bewirkt werden kann,
**dadurch gekennzeichnet, dass**
das Klebeband derart angepasst ist, dass sein Glanzwert, also der Quotient aus gerichtetem und diffus reflektiertem Anteil des auf die Oberfläche fallenden Lichtstroms, an der außenliegenden Oberfläche der Klebmassenschicht um mindestens 20 % verringert ist, bezogen auf ein baugleiches, aber nicht angepasstes Klebeband, indem zumindest die außenliegende Oberfläche der Klebmassenschicht durch Aufrauhung oder durch Einbringung einer Strukturierung mechanisch behandelt wurde und/oder der Klebmasse als Füllstoffe Fasern zugesetzt sind.

2. Klebeband nach Anspruch 1, **dadurch gekennzeichnet, dass** der Glanzwert um mindestens 30 %, besser um mindestens 40 %, bevorzugt um mindestens 50 %, sehr bevorzugt um mindestens 75 % reduziert ist.

3. Klebeband nach einem der vorangehenden Ansprüche, **dadurch gekennzeichnet, dass**
der Klebmasse als Füllstoffe PET-Fasern zugesetzt sind.

4. Klebeband nach einem der vorangehenden Ansprüche, **dadurch gekennzeichnet, dass**
die Füllstoffe in einem Anteil von mindestens 5 Gew.-Teile Füllstoffe auf 100 Gew.-Teile Klebmasse, insbesondere in einem Anteil von mindestens 10 Gew.-Teile Füllstoffe auf 100 Gew.-Teile Klebmasse zugesetzt sind.

5. Klebeband nach Anspruch 4, **dadurch gekennzeichnet, dass**
die zumindest eine der Oberflächen der Klebmassenschicht mit einem Profil innerhalb der Klebmassenoberfläche versehen ist, insbesondere durch Einbringung der komplementären Prägestruktur einer strukturierten Oberfläche.

6. Klebeband nach einem der vorangehenden Ansprüche, **dadurch gekennzeichnet, dass**
die Klebmasse der Klebmassenschicht eine Haftklebmasse ist.

7. Klebeband nach einem der vorangehenden Ansprüche, **dadurch gekennzeichnet, dass**
die optische Detektierbarkeit durch eine vollflächige oder einer teilflächige Einfärbung zumindest der der Klebmassenschicht zugewandte Oberfläche der Trägerschicht bewirkt wird, insbesondere durch eine schwarze Einfärbung.

8. Klebeband nach einem der vorangehenden Ansprüche, **dadurch gekennzeichnet, dass**
die optische Detektierbarkeit durch eine zwischen der Trägerschicht und der Klebmassenschicht vorgesehene eingefärbte Schicht bewirkt wird, insbesondere durch eine schwarz eingefärbte Schicht.

9. Verfahren für den fliegenden Rollenwechsel von auf Rollen aufgewickelten Flachbahnmaterial, bei welchem die oberste Flachbahn (11) einer neuen Rolle mit einem Klebeband (1), welches mit zumindest einem Hauptträger (2), zumindest einer Schicht einer Selbstklebmasse (3) auf der Oberseite und zumindest einem zur Erzeugung einer lösbaren Verbindung befähigten System (6) auf der Unterseite ausgerüstet ist, an der darunterliegenden Bahn (12) fixiert wird und wobei ein Teil der Selbstklebmasse (3) auf der Oberseite des Klebebandes offenliegt, woraufhin die so ausgerüstete neue Rolle neben eine fast gänzlich abgespulte zu ersetzende alte Rolle platziert wird und auf die im wesentlichen gleiche Drehgeschwindigkeit wie diese beschleunigt wird, dann gegen die alte Bahn (13) gedrückt wird, wobei die offenliegende Selbstklebmasse (3) des Klebebandes (1) mit der alten Bahn (13) bei im wesentlichen gleichen Geschwindigkeiten der Bahnen verklebt, während zugleich das System (6) die Verklebung der obersten Flachbahn (11) der neuen Rolle auf der darunterliegenden Bahn (12) derart öffnet, dass nach der Öffnung keine klebenden Bereiche offenliegen, und wobei der Zeitpunkt des Verklebungsvorganges der alten Bahn (13) mit der obersten Bahn (11) der neuen Rolle durch einen Detektor bestimmt wird, indem das Klebeband (1) oder zumindest ein Teil hiervon durch den Detektor optisch erkannt wird, **dadurch gekennzeichnet, dass**
die Selbstklebmassenschicht (3) auf der Oberseite des Klebebandes (1) derart angepasst ist, dass der Glanzwert an ihrer außenliegenden Oberfläche mindestens 20 % geringer ist als derjenige einer nicht behandelten, ansonsten identischen Klebmassenschicht, indem zumindest die außenliegende Oberfläche der Klebmassenschicht durch Aufrauhung oder durch Einbringung einer Strukturierung mechanisch behandelt wurde und/oder der Klebmasse als Füllstoffe Fasern zugesetzt sind.

10. Verfahren nach Anspruch 9, **dadurch gekennzeichnet, dass** das Klebeband (1) ein Klebeband nach einem der Ansprüche 1 bis 8 ist.

## Claims

1. Adhesive tape for flying splice of flat web material which has been wound to form rolls, the adhesive tape comprising at least one carrier layer and a layer of adhesive,
at least part of that surface of the carrier layer that faces that layer of adhesive being of optically detectable design,
or optically detectable means being provided between the carrier layer and the layer of adhesive, or within the layer of adhesive,
and the layer of adhesive being designed such that the optical detection can be made through the layer of adhesive,
**characterized in that**
the adhesive tape is modified such that its gloss value, i.e. the ratio of directed fraction and diffusely reflected fraction of the light stream incident on the surface, on the external surface of the layer of adhesive is reduced by at least 20% relative to an unmodified adhesive tape of otherwise identical construction, by at least the external surface of the layer of adhesive having been treated mechanically by roughening or through incorporation of a structuring and/or fibres having been added to the adhesive as fillers.

2. Adhesive tape according to Claim 1, **characterized in that** the gloss value is reduced by at least 30%, better still by at least 40%, preferably by at least 50%, very preferably by at least 75%.

3. Adhesive tape according to either of the preceding claims, **characterized in that** PET fibres have been added to the adhesive as fillers.

4. Adhesive tape according to any of the preceding claims, **characterized in that** the fillers have been added in a fraction of at least 5 parts by weight of fillers per 100 parts by weight of adhesive, more particularly in a fraction of at least 10 parts by weight of fillers to 100 parts by weight of adhesive.

5. Adhesive tape according to Claim 4, **characterized in that** the at least one of the surfaces of the layer of adhesive has a profile within the adhesive surface, more particularly through incorporation of the complementary embossing structure of a structured surface.

6. Adhesive tape according to any of the preceding claims, **characterized in that** the adhesive of the layer of adhesive is a pressure-sensitive adhesive.

7. Adhesive tape according to any of the preceding claims, **characterized in that** the optical detectability is brought about by means of full-area or part-area colouring at least of that surface of the carrier layer that faces the layer of adhesive, more particularly by means of black colouring.

8. Adhesive tape according to any of the preceding claims, **characterized in that** the optical detectability is brought about by a coloured layer provided between the carrier layer and the layer of adhesive, more particularly by a black-coloured layer.

9. Method for flying splice of flat web material which has been wound to form rolls, wherein the topmost flat web (11) of a new roll is affixed to the underlying web (12) with an adhesive tape (1) which is equipped with at least one main carrier (2), at least one layer of a self-adhesive (3) on the top face, and at least one system (6), capable of producing a partable bond, on the bottom face, and with part of the self-adhesive (3) being exposed on the top face of the adhesive tape, after which the new roll thus equipped is placed adjacent to an old, almost entirely unwound roll that requires replacement, and is accelerated to substantially the same rotational speed as said old roll, and then is pressed against the old web (13), the exposed self-adhesive (3) of the adhesive tape (1) adhering to the old web (13) when the webs have substantially the same speeds, while at the same time the system (6) opens the bond of the topmost flat web (11) of the new roll to the underlying web (12) in such a way that, after opening has taken place, there are no adhesive regions exposed, the point in time of the operation of bonding of the old web (13) to the topmost web (11) of the new roll being determined by a detector, by the adhesive tape (1) or at least part thereof being recognized optically by the detector, **characterized in that**
the layer of self-adhesive (3) is modified on the top face of the adhesive tape (1) in such a way that the gloss value on its external surface is at least 20% lower than that of an untreated but otherwise identical layer of adhesive, by at least the external surface of the layer of adhesive having been treated mechanically by roughening or through incorporation of a structuring and/or fibres having been added to the adhesive as fillers.

10. Method according to Claim 9, **characterized in that** the adhesive tape (1) is an adhesive tape according to any of Claims 1 to 8

## Revendications

1. Ruban adhésif pour le remplacement automatique de rouleaux de matériau en bande plate enroulé sur des rouleaux, le ruban adhésif comprenant au moins une couche de support et une couche de matière adhésive,
au moins une partie de la surface de la couche de support tournée vers la couche de matière adhésive étant conçue pour être optiquement détectable,
ou des agents optiquement détectables étant prévus entre la couche de support et la couche de matière adhésive ou à l'intérieur de la couche d'adhésif,
et la couche de matière adhésive étant conçue de manière que la détection optique puisse être effectuée à travers la couche de matière adhésive,
**caractérisé en ce que** le ruban adhésif est adapté pour que sa brillance, à savoir le quotient de la partie orientée et réfléchie en diffusion du flux lumineux tombant sur la surface, est réduite d'au moins 20 % sur la surface externe de la couche de matière adhésive, par rapport à un ruban adhésif de même structure, mais non adapté, par le fait qu'au moins la surface externe de la couche de matière adhésive a été traitée mécaniquement par grainage ou par introduction d'une texturation et/ou que des fibres sont ajoutées en tant que charges à la matière adhésive.

2. Ruban adhésif selon la revendication 1, **caractérisé en ce que** la brillance est réduite d'au moins 30 %, mieux d'au moins 40 %, de préférence d'au moins 50 %, de façon particulièrement préférée d'au moins 75 %.

3. Ruban adhésif selon l'une quelconque des revendications précédentes, **caractérisé en ce que** des fibres de PET sont ajoutées à la matière adhésive.

4. Ruban adhésif selon l'une quelconque des revendications précédentes, **caractérisé en ce que** les charges sont ajoutées en une proportion d'au moins 5 parties en poids de charges pour 100 parties en poids de matière adhésive, en particulier en une proportion d'au moins 10 parties en poids de charges pour 100 parties en poids de matière adhésive.

5. Ruban adhésif selon la revendication 4, **caractérisé en ce que** ladite au moins une des surfaces de la couche de matière adhésive est munie d'un profil à l'intérieur de la surface de la matière adhésive, en particulier par introduction de la structure gaufrée complémentaire d'une surface texturée.

6. Ruban adhésif selon l'une quelconque des revendications précédentes, **caractérisé en ce que** la matière adhésive de la couche de matière adhésive est une matière autoadhésive.

7. Ruban adhésif selon l'une quelconque des revendications précédentes, **caractérisé en ce que** la détectabilité optique est réalisée par une coloration, en particulier par une coloration noire, sur la totalité ou une partie au moins de la surface tournée vers la couche de matière adhésive de la couche de support.

8. Ruban adhésif selon l'une quelconque des revendications précédentes, **caractérisé en ce que** la détectabilité optique est réalisée au moyen d'une couche colorée, en particulier au moyen d'une couche colorée en noir, prévue entre la couche de support et la couche de matière adhésive.

9. Procédé pour le remplacement automatique de rouleaux de matériau en bande plate enroulé sur des rouleaux, dans lequel la bande plate supérieure (11) d'un nouveau rouleau comportant un ruban adhésif (1) qui est muni d'au moins un support principal (2), d'au moins une couche d'une matière autoadhésive (3) sur la face supérieure et, sur la face inférieure, d'au moins un système (6) apte à la production d'un assemblage détachable, est fixée sur la bande sous-jacente (12) et dans lequel une partie de la matière autoadhésive (3) se trouve à découvert sur la face supérieure du ruban adhésif, à la suite de quoi le nouveau rouleau ainsi muni est positionné contre un vieux rouleau presque complètement déroulé à remplacer et est accéléré jusqu'à pratiquement la même vitesse que celui-ci, puis est pressé contre la vieille bande (13), de sorte que la matière autoadhésive (3) du ruban adhésif (1), se trouvant à découvert, colle à la vieille bande (13) à des vitesses pratiquement égales des bandes, tandis qu'en même temps le système (6) ouvre le collage de la bande plate supérieure (11) du nouveau rouleau sur la bande sous-jacente (12), de sorte qu'après l'ouverture aucune zone collante ne se trouve à découvert, et dans lequel l'instant du processus de collage de la vieille bande (13) avec la bande supérieure (11) du nouveau rouleau est déterminé au moyen d'un détecteur, par le fait que le ruban adhésif (1) ou au moins une partie de celui-ci est reconnu optiquement par le détecteur, **caractérisé en ce que**
la couche de matière autoadhésive (3) sur la face supérieure du ruban adhésif (1) est adaptée de telle sorte que la brillance de sa surface externe est d'au moins 20 % plus faible que celle d'une couche de matière adhésive non traitée, par ailleurs identique, par le fait qu'au moins la surface externe de la couche de matière adhésive a été traitée mécaniquement par grainage ou par introduction d'une texturation et/ou que des fibres sont ajoutées en tant que charges à la matière adhésive.

10. Procédé selon la revendication 9, **caractérisé en ce que** le ruban adhésif (1) est un ruban adhésif selon l'une quelconque des revendications 1 à 8.
